Europäisches Patentamt

European Patent Office

Office européen des brevets

(11) Veröffentlichungsnummer: **0 036 909**
**A2**

# (12) EUROPÄISCHE PATENTANMELDUNG

(21) Anmeldenummer: 80107978.1

(22) Anmeldetag: 17.12.80

(51) Int. Cl.³: **G 01 N 29/04**
**G 01 M 7/00**

(30) Priorität: 02.04.80 DE 3012774

(43) Veröffentlichungstag der Anmeldung:
07.10.81 Patentblatt 81/40

(84) Benannte Vertragsstaaten:
BE CH FR GB IT LI NL

(71) Anmelder: Roeder, Eckhard, Dipl.-Ing.
Lesumer Heerstrasse 5
D-2820 Bremen 77(DE)

(72) Erfinder: Roeder, Eckhard, Dipl.-Ing.
Lesumer Heerstrasse 5
D-2820 Bremen 77(DE)

(72) Erfinder: Flake, Wolfgang
Arend-Klankestrasse
D-2820 Bremen 70(DE)

(74) Vertreter: Meissner & Bolte Patentanwälte
Hollerallee 73
D-2800 Bremen 1(DE)

(54) Verfahren zur zerstörungsfreien Prüfung von Bauteilen.

(57) Die Erfindung betrifft ein Verfahren zur zerstörungsfreien Prüfung von Bauteilen durch Messung ihrer Resonanzschwingungen. Die Erfindung bezweckt, ohne Abrastern des Prüflings (Bauteil) Fehler festzustellen, um auf diese Art Bauteile prüfen zu können, die nur einseitig zugänglich sind. Die Erfindung besteht darin, dass der Prüfling (1) mit einer schmalbandigen Ultraschallschwingung angeregt wird, die in ihrer Frequenz verändert wird; die jeweilige Amplitude der Resonanzschwingung gemsssen und in einem x, y-Koordinatensystem der Frequenz der anregenden Ultraschallschwingung zugeordnet wird (Blockschaltbild).

EP 0 036 909 A2

**0036909**

Anmelder:

Herr Dipl.-Ing.
Eckhard Roeder
Lesumer Heerstr. 5

2820 Bremen 77

PATENTANWÄLTE
DIPL.-ING. HANS MEISSNER
DIPL.-ING. ERICH BOLTE

D 2800 BREMEN 1,
Slevogtstraße 21
Bundesrepublik Deutschland

Telefon 0421-34 20 19
Telegramme: PATMEIS BREMEN
Telex: 24 6157 (melbo d)

Datum  1. April 1980

Unser Zeichen   5211

Ihr Zeichen

### Verfahren zur zerstörungsfreien Prüfung von Bauteilen

Die Erfindung betrifft ein Verfahren zur zerstörungsfreien Prüfung von Bauteilen durch Messung ihrer Resonanzschwingungen.

Die Erfindung soll vornehmlich in der Qualitätssicherung und Schadenanalyse zur Prüfung und Überwachung von Werkstoffen und Bauteilen angewandt werden. Bei der Herstellung sowie der technischen oder mechanischen Behandlung bzw. Beanspruchung von Bauteilen können unerwünschte Gefügeveränderungen und Risse auftreten. Zur Vermeidung von Bauteilversagen ist es erforderlich, diese Veränderungen zerstörungsfrei zu prüfen.

Es ist bekannt, dass sich Gefügeveränderungen in Bauteilen in einer Beeinflussung des Elastizitätsmoduls, der Dichte und der Querkontraktion auswirken und die Schallausbreitung beeinflussen. Bei Anregung des Bauteils zu Schwingungen bilden sich im Zusammenhang mit der Geometrie charakteristische Resonanzen heraus, die eine Information über den Bauteilzustand liefern. Ähnliches gilt bei der Ausbildung von Rissen, da hierdurch das Feder/Masse-System verändert wird. Auch diese Fehler äussern sich in einer Veränderung der Schwingungsausbildung im Bauteil.

Die bekannten Prüfmethoden, die mit Ultraschallanregung von Bauteilen arbeiten, beruhen darauf, einen Schallimpuls in das Bauteil zu senden und seine Veränderung durch Fehler im Bauteil zu messen (Durchschallungsverfahren bzw. Impulsechoverfahren).

Bei diesen Verfahren wird der Sendeimpuls mit einer konstanten Frequenz erzeugt und muss möglichst schnell wieder abklingen, damit das Echo, das von der Rückwand des Bauteils oder dem dazwischen liegenden Fehler reflektiert wird, empfangen werden kann. Dazu ist es erforderlich, dass der Sendeimpuls den Fehler direkt trifft. Zur Fehlerermittlung in einem Bauteil muss dieses daher entlang seiner Oberfläche abgerastert werden. Fehler können nur dann erkannt werden, wenn sie von dem Sendesignal direkt erreicht werden. Es ist daher wünschenswert, für eine schnelle Fehlererkennung in Bauteilen ein Verfahren zu haben, das eine integrale Messung des Bauteils gestattet und mit dem auch verdeckte Fehler erkannt werden können.

Der Erfindung liegt die Aufgabe zugrunde, ohne Abrastern des Prüflings (Bauteil) Fehler festzustellen, um auf diese Art auch Bauteile prüfen zu können, die nur einseitig zugänglich sind.

1. April 1980

Diese Aufgabe wird erfindungsgemäss dadurch gelöst, dass der Prüfling mit einer schmalbandigen Ultraschallschwingung angeregt wird, die in ihrer Frequenz verändert wird; die jeweilige Amplitude der Resonanzschwingung gemessen und in einem x,y-Koordinatensystem der Frequenz der anregenden Ultraschallschwingung zugeordnet wird.

Die Frequenz der anregenden Schwingung kann in Stufen für eine vollautomatische Auswertung oder kontinuierlich für eine bildliche Darstellung verändert werden.

Zur Erhöhung der Auflösung der Amplituden (Resonanzen) bei der jeweiligen Frequenz lässt sich neben der absoluten Höhe der Amplituden auch direkt ihre Veränderung erfassen, wodurch auch sehr kleine Fehler des Prüflings erkennbar werden.

Es ist deshalb nach einem weiteren Vorschlag der Erfindung vorteilhaft, das Verfahren in der Weise durchzuführen, dass durch eine Gleichspannungsentkopplung der gemessenen Amplituden der Resonanzschwingungen und nachfolgende Hüllkurvenbildung direkt die Abweichung der Amplituden gemessen wird.

Ferner ist es nach einem Vorschlag der Erfindung vorteilhaft, dass die Frequenz der anregenden Ultraschallschwingung stufenweise verändert wird und für jede Stufe Grenzwerte für die Amplituden der Resonanzschwingung des Bauteils vorgegeben werden zwecks vollautomatischer Auswertung. Damit ist dieses Verfahren von subjektiven Einflüssen des Prüfpersonals unabhängig.

Die entscheidenden Vorteile des erfindungsgemässen Verfahrens bestehen darin, dass der Prüfling nicht abgerastert wird. Darüber hinaus werden auch verdeckte Fehler erfasst. Weitere Vorteile bestehen darin, dass

- eine direkte Zuordnung zwischen dem Prüfbefund und dem Bauteilzustand auf automatische Weise möglich ist.

- die Werte bei automatischer Durchführung von subjektiver Beurteilung des Prüfpersonals unabhängig sind

- die Prüfung durch Entscheidungsschwellen voll automatisiert in einen Produktionsablauf eingegliedert werden kann.

Die Erfindung kann in verschiedener Weise ausgeführt werden. Zum leichteren Verständnis ist in dem anliegenden Blockschaltbild eine erfindungsgemässe Einrichtung beispielsweise dargestellt.

Die Bezugszeichen bedeuten:

1. - Prüfling (Bauteil)

2. - Sender

3. - Empfänger

4. - Frequenzgenerator

5. - Eichsignalgenerator

6. - Umschalter

7. - Verstärker

8. - Gleichrichter

9. - Amplitudenmessgerät

10. - Bildschirm für x,y-Koordinatendarstellung

0036909

11.1  - Hüllkurvenbildner mit Zeitkonstante
        "eins"

11.2  - Hüllkurvenbildner mit Zeitkonstante
        "zwei"

12    - Umschalter

13    - x, y-Koordinatenschreiber

14    - Gleichspannungsentkoppler

15    - Grenzwertvorgabegerät

16    - Steuerrelais

17    - Alarmsteuerung.

Der Prüfling (Bauteil) 1 wird von dem Sender 2 mit einer schmalbandigen Ultraschallschwingung aus dem Frequenzgenerator 4 angeregt.

Der Empfänger 3 nimmt die Resonanzschwingungen des Prüflings 1 auf.

Mittels des Umschalters 6 kann anstelle des Frequenzgenerators 4 an den Sender 2 ein Eichsignalgenerator 5 angeschaltet werden. Zur Überprüfung der Ankopplung des Senders 2 und Empfängers 3 an den Prüfling 1.

Der Frequenzgenerator 4 kann eine Frequenz $f_1$ auf den Bildschirm 10, und zwar auf dessen x-Koordinate, geben, während er durch Umschalten eine Frequenz $f_2$ auf den Koordinatenschreiber 13, und zwar auf dessen x-Koordinate gibt. Die Freqzenzen $f_1$ und $f_2$ werden kontinuierlich durchgestimmt.

Der Frequenzgenerator 4 kann ausserdem an das Grenzwertvorgabegerät 15 eine Frequenz $f_3$ stufenweise abgeben.

0036909

1. April 1980

Die im Empfänger 3 vom Prüfling 1 empfangenen Resonanzschwingungen werden im Verstärker 7 verstärkt und nach
Gleichrichtung im Gleichrichter 8 auf das Amplitudenmessgerät 9 gegeben. Die jeweilige Amplitude der vom
Amplitudenmessgerät gemessenen Resonanzschwingung wird
der y-Koordinate des Bildschirmes 10 zugeführt. Hier
erfolgt die Darstellung des funktionalen Zusammenhangs
zwecks Sichtbarmachung von Fehlern im Prüfling 1.

Es besteht weiter die Möglichkeit, die im Amplitudenmessgerät 9 gemessene jeweilige Amplitudenresonanzschwingung über einen Umschalter 12 entweder dem
Hüllkurvenbildner 11.1/mit Zeitkonstante "eins" oder dem
Hüllkurvenbildner 11.2/mit Zeitkonstante "zwei" unter
Zwischenschaltung eines Gleichspannungsentkopplers 14
zugeführt und von ihm jeweils auf die y-Koordinate
eines Koordinatenschreibers 13 gegeben. Dieser dokumentiert das Fehlerbild.

Ferner kann zur vollautomatischen Auswertung die
jeweilige im Amplitudenmessgerät 9 gemessene Amplitude
der Resonanzschwingung auf das Grenzwertvorgabegerät 15
gegeben werden, um dort automatisch mit den vorgegebenen Grenzwerten verglichen zu werden. Werden die Grenzwerte überschritten, so wird vom Grenzwertvorgabegerät
15 aus das Steuerrelais 16 betätigt, welches seinerseits zum Beispiel eine Alarmsteuerung 17 anregt.

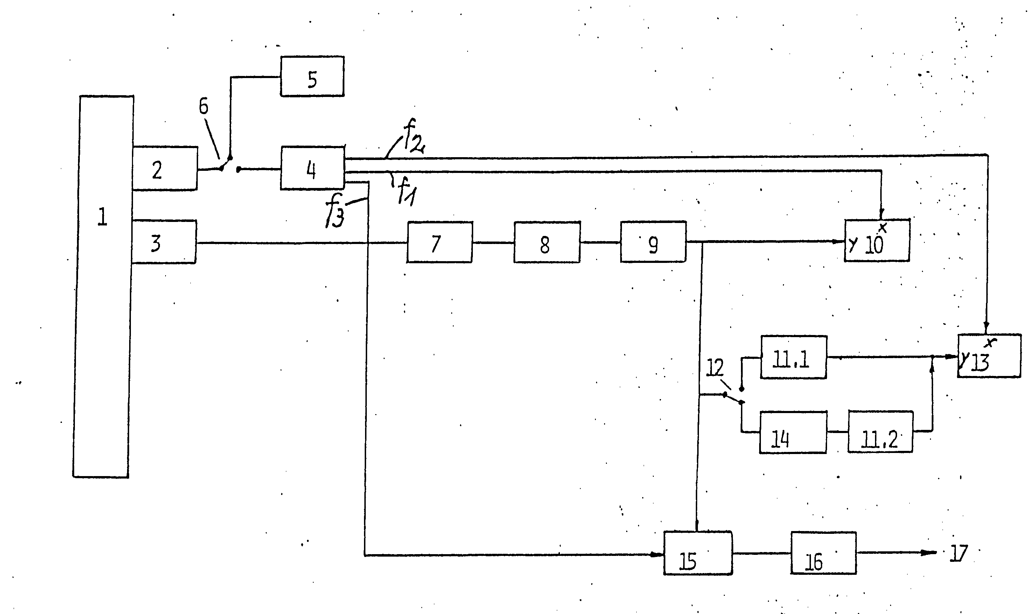

Ansprüche

1.) Verfahren zur zerstörungsfreien Prüfung von Bauteilen durch Messung ihrer Resonanzschwingungen, dadurch gekennzeichnet, dass der Prüfling (1) mit einer schmalbandigen Ultraschallschwingung angeregt wird, die in ihrer Frequenz verändert wird; die jeweilige Amplitude der Resonanzschwingung gemessen und in einem x, y-Koordinatensystem der Frequenz der anregenden Ultraschallschwingung zugeordnet wird.

2.) Verfahren nach Anspruch 1, dadurch gekennzeichnet, dass durch eine Gleichspannungsentkopplung der gemessenen Amplituden der Resonanzschwingungen und nachfolgende Hüllkurvenbildung direkt die Abweichung der Amplituden gemessen wird.

3.) Verfahren nach Anspruch 1 oder 2, dadurch gekennzeichnet, dass die Frequenz der anregenden Ultraschallschwingung stufenweise verändert wird und für jede Stufe Grenzwerte für die Amplituden der Resonanzschwingung des Bauteils vorgegeben werden zwecks vollautomatischer Auswertung.

0036909
1. April 1980